# EUROPÄISCHE PATENTSCHRIFT

(11) **EP 2 646 667 B1**
(45) Veröffentlichungstag und Bekanntmachung des Hinweises auf die Patenterteilung: **21.09.2016**
(21) Anmeldenummer: 11791267.5
(22) Anmeldetag: 29.11.2011
(51) Int. Cl.: F01P 7/16, G05D 23/13

(54) **THERMOSTATVENTIL MIT KÜHLMITTELSTILLSTAND-FUNKTION**
THERMOSTAT VALVE WITH COOLANT STOPPAGE FUNCTION
VALVE THERMOSTATIQUE PRÉSENTANT UNE FONCTION D'ARRÊT DU LIQUIDE DE REFROIDISSEMENT

(30) Priorität: 30.11.2010 DE 102010062206
(43) Veröffentlichungstag der Anmeldung: 09.10.2013
(73) Patentinhaber: MAHLE Behr Kornwestheim GmbH, 70806 Kornwestheim (DE)
(72) Erfinder: AUWEDER, Andreas, 71665 Vaihingen/Enz (DE)
(74) Vertreter: Grauel, Andreas
(86) Internationale Anmeldenummer: PCT/EP2011/071329
(87) Internationale Veröffentlichungsnummer: WO 2012/072654

(56) Entgegenhaltungen:
- EP-A2- 2 104 015
- WO-A1-2007/134808
- DE-A1- 2 755 466
- DE-A1- 4 416 554
- DE-A1- 4 427 340
- DE-A1-102004 021 009
- US-A- 5 494 005

## Beschreibung

Die Erfindung betrifft ein Thermostatventil für eine Kühlanlage eines Verbrennungsmotors mit Kühlmittelstillstand-Funktion umfassend ein erstes Kurzschluss-Ventilelement und ein zweites Kurzschluss-Ventilelement.

Thermostatventile für Kühlanlagen von Verbrennungsmotoren umfassen ein zwischen einem Motoraustritt oder einem Motoreintritt und einem Kühlmittelkühler angeordnetes Hauptventil und ein zwischen Motoreintritt und Motoraustritt angeordnetes Kurzschlussventil. In einer Warmlaufphase eines Motors ist bei herkömmlichen Thermostatventilen das Hauptventil geschlossen und das Kurzschlussventil geöffnet, sodass ein Kühlmittel in der Warmlaufphase nicht über den Kühlmittelkühler geführt wird.

Um eine Warmlaufphase zu verkürzen sind Thermostatventile mit einer sogenannten Kühlmittelstillstand-Funktion bekannt, wobei während der Warmlaufphase sowohl das Hauptventil als auch das Kurzschlussventil geschlossen sind.

Beispielsweise ist aus WO 2007/134808 A1 ein Thermostatventil für eine Motoraustrittsregelung mit anfangs stehendem Kühlmittel gemäß dem Oberbegriff des Anspruchs 1 bekannt, wobei zusätzlich zu einem ersten, als Ventilschieber gestaltetes Kurzschluss-Ventilelement ein zweites, als Ventilteller gestaltetes Kurzschluss-Ventilelement vorgesehen ist. Der Ventilteller und der Ventilschieber sind als integrales Bauteil realisiert und mit einem Arbeitskolben eines thermostatischen Arbeitselements verbunden. Dabei ist der Ventilteller in Ausfahrrichtung des Arbeitskolbens dem Ventilschieber vorgeordnet. Zwischen Motoreintritt und Motoraustritt ist eine Traverse angeordnet, die sowohl einen Ventilsitz für den Ventilschieber als auch einen Ventilsitz für den Ventilteller bildet.

Es ist eine Aufgabe der vorliegenden Erfindung, ein Thermostatventil mit Kühlmittelstillstand-Funktion zu schaffen, welches eine einfache Fertigung und Montage ermöglicht.

Diese Aufgabe wird durch eine Thermostatventilanordnung gemäß dem Anspruch 1 gelöst.

Das Thermostatventil ist in einer Ausgestaltung als Thermostateinsatz gestaltet. In anderen Ausgestaltungen ist das Thermostatventil als Integralthermostat oder Gehäusethermostat ausgebildet. Je nach Stellung des Hauptventilelements und des ersten Kurzschluss-Ventilelements wird ein Kühlmittelstrom über die Kühlanlage oder ganz oder teilweise über einen die Kühlanlage umgehenden Kurzschlusskanal geführt. Durch das zweite Kurzschluss-Ventilelement ist ein Verschließen des Kurzschlusskanals bei geschlossenem Hauptventilelement und damit eine Kühlmittelstillstand-Funktion realisiert.

Als Traverse wird im Zusammenhang mit der Erfindung ein Bauteil bezeichnet, welches in einem Kurzschlusskanal zwischen Motoraustritt und Motoreintritt angeordnet ist. Die Traverse weist mindestens eine als Ventilsitz für das erste und das zweite Kurzschluss-Ventilelement gestaltete Öffnung, auch als Kurzschluss bezeichnet, auf.

Als axialer Auflagebereich wird im Zusammenhang mit der Erfindung ein Bereich bezeichnet, welcher das Gegenstück für eine zumindest einseitige Übertragung von in Axialrichtung wirkenden Kräften kontaktiert. Der axiale Auflagebereich erlaubt eine einfache Montage durch Einsetzen der Traverse in ein Gegenstück. Notwendige Lagerkräfte werden über die Druckfeder aufgebracht. Der axiale Auflagebereich ist dabei in einer Ausgestaltung durch eine Kontaktlinie gebildet. In anderen Ausgestaltungen ist eine flächige Kontaktierung in einer Kontaktfläche vorgesehen. Der Bund der Traverse weist in einigen Ausgestaltungen Nuten oder Ausnehmungen für einen Leckagefluss auf, wobei der Auflagebereich mehrere voneinander in Umfangsrichtung beabstandete Abschnitte aufweist.

Die Traverse ist in einer Ausgestaltung abdichtend in den Kurzschlusskanal eingesetzt, wobei ein Kühlmittelfluss lediglich über eine in der

Traverse vorgesehene Öffnung möglich ist. Hierfür sind in einer Ausgestaltung Dichtelemente vorgesehen. Alternativ oder zusätzlich ist die Traverse aus einem Material gefertigt, welches abdichtende Eigenschaften beim Zusammenwirken mit einem Gegenstück aufweist.

In anderen Ausgestaltungen ist vorgesehen, dass ein Leckagefluss über den Bund und/oder durch eine Öffnung an der Traverse verbleibt. Durch den Leckagefluss ist sichergestellt, dass auch bei einem Kühlmittelstillstand eine ausreichende Umströmung eines temperaturabhängig betätigbaren, in einem Verteilerraum zwischen Hauptventil und Kurzschlussventil angeordneten Elements gegeben ist.

Die Traverse ist in einer Ausgestaltung in einem Zwei-Komponenten Kunststoffverfahren hergestellt. In einer Ausgestaltung ist die Traverse aus einem Thermoplast, beispielsweise einem hydrolysestabilisierten, glasfaserverstärktem Polyamid (PA), insbesondere PA 66, und einer Weichkomponente, beispielsweise einem Elastomerwerkstoff wie Ethylen- Propylen- Dien-Monomer (EPDM) hergestellt. In anderen Ausgestaltungen ist ein thermoplastisches Material als Weichkomponente verwendet, beispielsweise ein thermoplastisches Elastomer (TPE). In wieder anderen Ausgestaltungen ist die Traverse ganz oder teilweise als Metallteil, insbesondere als Stanzteil gefertigt.

Die mindestens eine Öffnung in der Traverse ist in Abhängigkeit eines Druckverhältnisses und/oder einer Temperatur geöffnet oder durch das erste oder das zweite Kurzschluss-Ventilelement verschlossen. Gemäß der Erfindung bildet die Druckfeder das Rückstellelement für das erste Kurzschluss-Ventilelement und das Hauptventilelement. In einer Ausgestaltung stützt sich die Druckfeder zu diesem Zweck an dem Hauptventüteller ab. Die Druckfeder ist geeignet dimensioniert, dass ein gewünschtes Öffnungs- und Schließverhalten erzielt wird. Das Hauptventilelement und das erste Kurzschluss-Ventilelement sind entgegen der Kraft der Druckfeder gemeinsam verstellbar.

In einer Ausgestaltung sind das Hauptventilelement, das erste Kurzschluss-Ventilelement und das zweite Kurzschluss-Ventilelement mit einem gemeinsamen Antriebselement für eine Bewegungsübertragung gekoppelt, wobei vorzugsweise das erste Kurzschluss-Ventilelement und/oder das Hauptventilelement mit einem Leerhub mit dem Antriebselement gekoppelt sind. Als Leerhub wird im Zusammenhang mit der Erfindung eine Strecke bezeichnet, über welche das Antriebselement und das erste Kurzschluss-Ventilelement und/oder das Hauptventilelement relativ zueinander verschieblich sind. Das zweite Kurzschluss-Ventilelement ist vorzugsweise dem ersten Kurzschluss-Ventilelement in Betätigungsrichtung vorgelagert, wobei in einer Warmlaufphase das zweite Kurzschluss-Ventilelement den Kurzschlusskanal verschließt. Aufgrund des Leerhubs wird ein Hub des Antriebselements zunächst nicht auf das erste Kurzschluss-Ventilelement und/oder das Hauptventilelement übertragen. Erst wenn ein Hub einen definierbaren Schwellwert übersteigt, erfolgt eine Verstellbewegung. Das zweite Kurzschluss-Ventilelement ist vorzugsweise ohne Leerhub mit dem Antriebselement gekoppelt. In anderen Ausgestaltungen ist ein Leerhub zwischen dem zweiten Kurzschluss-Ventilelement und dem Antriebselement vorgesehen, welcher jedoch kleiner ist, als der Leerhub des ersten Kurzschluss-Ventilelements und/oder des Hauptventilelements, sodass ein Verstellen des zweiten Kurzschluss-Ventilelement mittels dem Antriebselement ohne Betätigung des ersten Kurzschluss-Ventilelements und/oder des Hauptventilelements möglich ist. Bei einer Kopplung des Hauptventilelements mit Leerhub ist ein temperaturabhängiges Betätigen des zweiten Kurzschluss-Ventilelements ohne Bewegungsübertragung auf das Hauptventilelement in einer ersten Warmlaufphase möglich. Sofern das erste Kurzschluss-Ventilelement über einen Leerhub mit dem Antriebselement gekoppelt ist, wird ein Verstellen des ersten Kurzschluss-Ventilelements bei Verstellen des zweiten Kurzschluss-Ventilelements anfänglich verhindert. Dadurch wird ein ungewünschtes schnelles Verschließen des Kurzschlusskanals durch das erste Kurzschluss-Ventilelement verhindert. In vorteilhaften Ausgestaltungen ist zudem eine druckabhängige Betätigung des zweiten Kurzschluss-Ventilelements möglich. Sofern die Bewegung des zweiten Kurzschluss-Ventilelements auf das Antriebselement übertragen wird, verhindert dabei der Leerhub eine weitere Übertragung auf das Hauptventilelement und/oder das erste Kurzschluss-Ventilelement. In anderen Ausgestaltungen ist eine Übertragung der Bewegung des zweiten Kurzschluss-Ventilelements auf das Antriebselement verhindert.

Gemäß der Erfindung sind wenigstens zwei unterschiedlich ausgelegte Rückstellelemente vorgesehen, wobei das erste Kurzschluss-Ventilelement entgegen der Kraft des ersten Rückstellelements und das zweite Kurzschluss-Ventilelement entgegen der Kraft des zweiten Rückstellelements verstellbar gelagert ist, und wobei das erste und das zweite Rückstellelement an gegenüberliegenden Seiten der Traverse abgestützt sind. Die Rückstellelemente sind vorzugsweise jeweils als Druckfeder gestaltet. Die auf das zweite Kurzschluss-Ventilelement wirkende Druckfeder ist dabei geeignet ausgelegt, um eine Überdruckfunktion zu gewährleisten. Bei einer Motoraustrittsregelung wirkt die auf das zweite Kurzschluss-Ventilelement wirkende Druckfeder als Differenzdruckfeder. Bei einer Motoreintrittsregelung erfolgt eine geeignete Auslegung der Rückstellelemente unter Berücksichtigung der Geometrien der wirksamen Flächen.

In einer Weiterbildung der Erfindung weist die Traverse eine Halteelementeinrichtung für das zweite Rückstellelement auf, wobei die Halteelementeinrichtung vorzugsweise mindestens zwei in Axialrichtung ragende Haltearme aufweist. Dadurch kann auf weitere Bauteile zum Halten verzichtet werden und es wird eine kompakte Baueinheit geschaffen. In anderen Ausgestaltungen ist für das zweite Rückstellelement ein zusätzliches Bauteil vorgesehen. In wieder anderen Ausgestaltungen stützt sich das Rückstellelement an dem Gegenstück ab.

Das Hauptventilelement und das erste Kurzschluss-Ventilelement sind in weiteren Ausgestaltungen als integrales Bauteil gestaltet. Als integrales Bauteil werden ein einteilig gefertigtes Bauteil oder wenigstens in Axialrichtung starr verbundene Einzelteile bezeichnet. Das integrale Bauteil ist in einer Ausgestaltung derart dimensioniert, dass beim Verschieben der Ventileinheit zunächst der Anschluss zu dem Kühlmittelkühler geöffnet wird, wobei der Kurzschlusskanal für einen Mischbetrieb noch geöffnet bleibt. Erst bei einem weiteren Verstellen verschließt das erste Kurzschluss-Ventilelement den Kurzschlusskanal.

In einer weiteren Ausgestaltung ist ein einen Hauptventilsitz bildendes Grundelement vorgesehen, wobei die Traverse und das Grundelement entgegen der Kraft der Druckfeder begrenzt verschieblich verbunden sind. Das Grundelement ist bei einer Ausgestaltung des Thermostatventils als Thermostateinsatz vorzugsweise als Grundplatte gestaltet. Bei einer Ausgestaltung des Thermostatventils als Integralthermostat oder Gehäusethermostat ist das Grundelement als Thermostatdeckel gestaltet. Durch die Traverse und das Grundelement ist eine vormontierte Baueinheit geschaffen, welche auf einfache Weise in der Endmontage verbaut werden kann. Die Druckfeder ist in vorteilhaften Ausgestaltungen zwischen der Traverse und dem Grundelement eingesetzt und stützt sich an Traverse und über das Hauptventilelement am Grundelement ab. Die Traverse weist dabei in einer Ausgestaltung mindestens zwei Stege auf, welche mit korrespondierenden Laschen des Grundelements mechanisch verbunden sind. Die Stege und die Laschen sind in einer Weiterbildung als korrespondierende Bügel und Haken ausgebildet, wobei die Haken in die Bügel eingehängt, insbesondere begrenzt verschieblich eingehängt sind. Aufgrund der verschieblichen Verbindung ist es möglich, dass sich die Bauteile bei der Montage relativ zueinander bewegen und so die Traverse aufgrund der Kraft der Druckfeder in Richtung einer Gegenfläche des Gegenstücks gezwungen ist.

Das Hauptventilelement ist in vorteilhaften Ausgestaltungen als Ventilteller gestaltet. In anderen Ausgestaltungen ist ein Diagonalventil als Hauptventil vorgesehen, wie es beispielsweise in der unveröffentlichten Anmeldung DE 102009042496.2 beschrieben ist. Das erste Kurzschluss-Ventilelement ist einer Ausgestaltung als Ventilteller ausgebildet. In vorteilhaften Ausgestaltungen ist das erste Kurzschluss-Ventilelement als Ringschieber gestaltet, wobei die Traverse einen an einem Innenumfang einer Öffnung vorgesehenen Schieber-Ventilsitz aufweist, welcher mittels des Kurzschluss-Ventilelements verschließbar ist. Das erste Kurzschluss-Ventilelement und der Ventilsitz weisen zueinander korrespondierende Formen auf, vorzugsweise sind beide rotationssymmetrisch, insbesondere zylindrisch gestaltet, sodass eine Relativverdrehung der Bauteile ohne Verkanten beim Verschieben des ersten Kurzschluss-Ventilelements möglich ist. Das zweite Kurzschluss-Ventilelement ist vorzugsweise als Ventilteller ausgebildet, insbesondere als konischer Ventilteller. Der konische Ventilteller verjüngt sich vorzugsweise in Richtung Antriebselement. In anderen Ausgestaltungen weist ein Öffnungswinkel des konischen Ventiltellers in Richtung Antriebselement. In einer Ausgestaltung sind das erste und das zweite Kurzschluss-Ventilelement an einem gemeinsamen Bauteil realisiert. Vorzugsweise sind die Kurzschluss-Ventilelemente jedoch an getrennten Bauteilen realisiert, um eine getrennte Verstellbarkeit zu ermöglichen. Dabei wirken die Kurzschluss-Ventilelemente vorzugsweise jeweils mit einem eigenen Rückstellelement zusammen, wobei das Rückstellelement des ersten Kurzschluss-Ventilelements ein ungewünschtes Verschließen des Kurzschlussventils bei einer druckverlustabhängigen Öffnungsbewegung des zweiten Kurzschluss-Ventilelements verhindert.

In vorteilhaften Ausgestaltungen ist ein thermostatisches Arbeitselement mit einem Arbeitskolben, welcher aus einem Gehäuse des Arbeitselements austreibbar ist, vorgesehen, wobei das Hauptventilelement, das erste Kurzschluss-Ventilelement und das zweite Kurzschluss-Ventilelement mit dem beim Austreiben des Arbeitskolbens aus dem Gehäuse bewegten Element für eine Bewegungsübertragung verbunden sind. Je nach Anordnung des Arbeitselements ist dabei das Gehäuse oder der Arbeitskolben beim Austreiben des Arbeitskolbens bewegbar.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet.

In den Zeichnungen zeigen in Querschnitten:
- Fig. 1:: ein Ausführungsbeispiel eines als Thermostateinsatz gestalteten Thermostatventils in einer Austrittsregelung bei Kühlmittelstillstand;
- Fig. 2:: das als Thermostateinsatz gestaltete Thermostatventil gemäß Fig. 1 in einer Austrittsregelung im Überdruckbetrieb;
- Fig.3:: das als Thermostateinsatz gestaltete Thermostatventil gemäß Fig. 1 in einer Austrittsregelung im Mischbetrieb;
- Fig. 4:: das als Thermostateinsatz gestaltete Thermostatventil gemäß Fig. 1 in einer Austrittsregelung im Kühlerbetrieb;
- Fig. 5:: ein als Thermostateinsatz gestaltetes Thermostatventil gemäß Fig. 1 in einer Eintrittsregelung in einem ersten Überdruckbetrieb;
- Fig. 6:: ein als Thermostateinsatz gestaltetes Thermostatventil gemäß Fig. 5 in einer Eintrittsregelung in einem zweiten Überdruckbetrieb;
- Fig. 7:: ein zweites Ausführungsbeispiel eines als Thermostateinsatz gestalteten Thermostatventils bei Kühlmittelstillstand;
- Fig. 8:: ein Ausführungsbeispiel eines als Integralthermostat gestalteten Thermostatventils bei Kühlmittelstillstand und
- Fig. 9:: ein nicht erfindungsgemäßes Beispiel eines als Gehäusethermostat gestalteten Thermostatventils bei Kühlmittelstillstand.

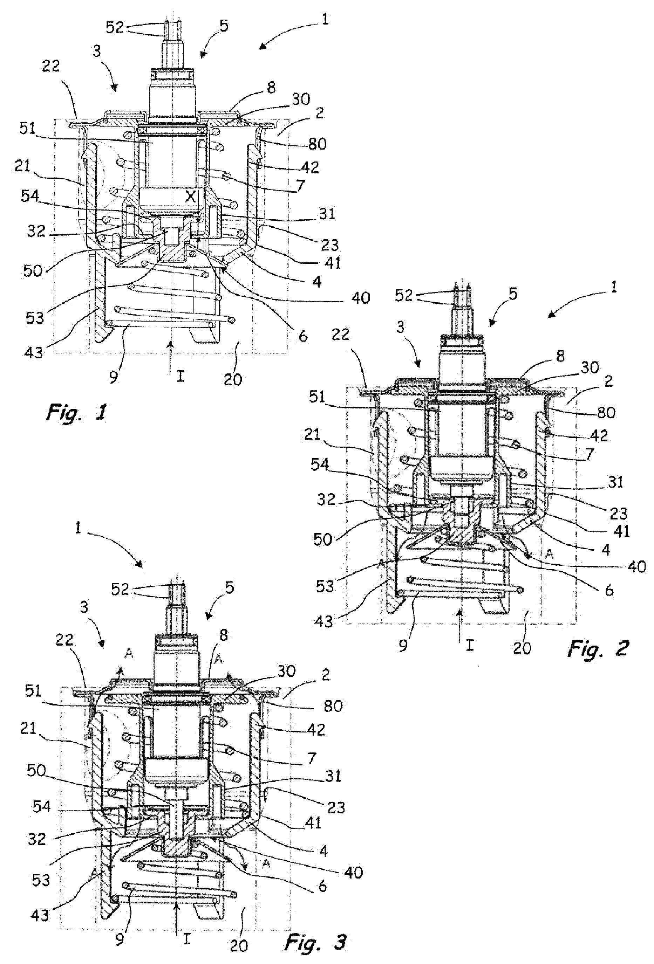

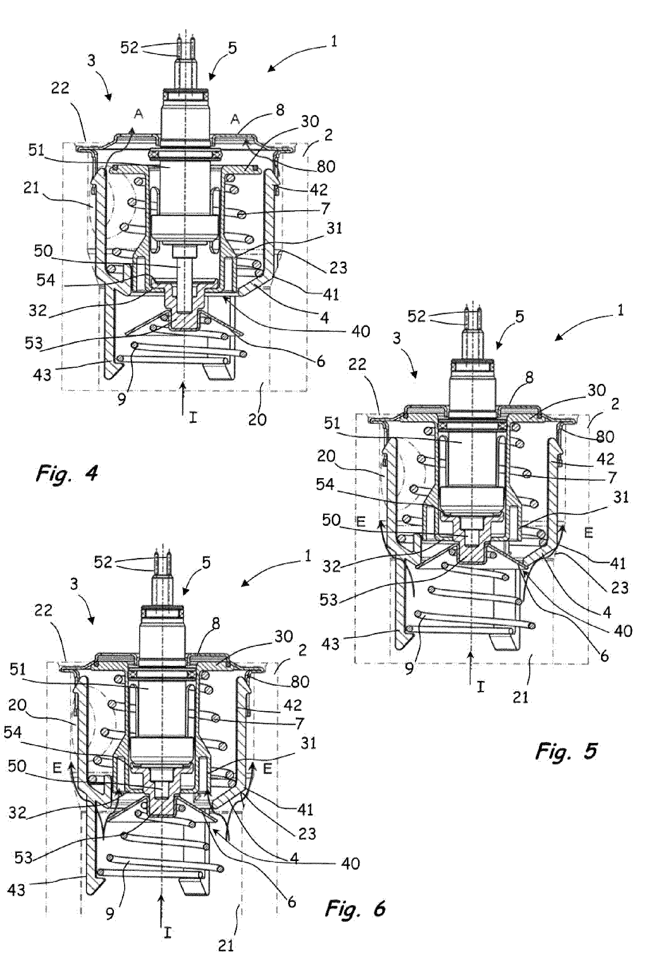

Die Fig. 1 bis 4 zeigen schematisch ein erstes Ausführungsbeispiel eines als Thermostateinsatz gestalteten Thermostatventils 1 in Darstellung einer Motoraustrittsregelung, kurz Austrittsregelung, bei Kühlmittelstillstand (Fig. 1), im Überdruckbetrieb (Fig. 2), im Mischbetrieb (Fig. 3) beziehungsweise im Kühlerbetrieb (Fig. 4). Fluidströme eines Kühlmittels sind durch Pfeile A dargestellt.

Das Thermostatventil 1 ist in einem als Gehäuse gestalteten Gegenstück 2 mit einem Motoreintritt 20, einem Motoraustritt 21 und einem Anschluss 22 zu einem Kühlmittelkühler angeordnet. Zwischen dem Motoraustritt 21 und dem Anschluss 22 zu dem Kühlmittelkühler ist ein Hauptventilelement 30 angeordnet, wobei das Thermostatventil 1 einen aus dem Motor austretenden Fluidstrom über den Kühlmittelkühler bzw. über den Kurzschlusskanal regelt. Zwischen dem Motoraustritt 21 und dem Motoreintritt 20 ist eine Traverse 4 mit einer Öffnung 40 angeordnet, welche Ventilsitze für ein erstes Kurzschluss-Ventilelement 31 und ein zweites Kurzschluss-Ventilelement 6 bildet. In dem dargestellten Ausführungsbeispiel ist das erste Kurzschluss-Ventilelement 31 als Ringschieber gestaltet, welcher mit einem an einem Innenumfang der Öffnung 40 gebildeten Ventilsitz zusammenwirkt. Das zweite Kurzschluss-Ventilelement 6 ist als Ventilteller gestaltet, welcher mit einem Rand der Öffnung 40 zusammenwirkt. Ein zwischen dem Hauptventilelement 30 und der Traverse 4 gebildeter Raum, wird auch als Verteilerkammer bezeichnet.

Die Traverse 4 weist an ihrer Außenseite einen umlaufenden Bund 41 auf, welcher einen axialen Auflagebereich bildet und an eine Gegenfläche 23 an dem Gegenstück 2 anliegt. Die Gegenfläche 23 ist in dem dargestellten Ausführungsbeispiel als schräge Fläche ausgebildet. Dadurch ist eine selbstzentrierende Anordnung der Traverse 4 möglich. In anderen Ausgestaltungen ist eine Ringschulter an dem Gegenstück 2 vorgesehen. Der Bund 41 ist durch eine Druckfeder 7 in bzw. entgegen Axialrichtung I belastet, sodass der Bund 41 in Richtung der Gegenfläche 23 des Gegenstücks 2 gezwungen ist. Die Druckfeder 7 stützt sich dabei über das Hauptventilelement 30 an einem als Grundplatte 8 gestalteten Grundelement ab. Die Grundplatte 8 ist in oder an dem Gegenstück 2 ortsfest gelagert. Das Hauptventilelement 30 ist in dem dargestellten Ausführungsbeispiel als Ventilteller, auch als Hauptteller bezeichnet, gestaltet. Ein Hauptventilsitz ist an der Grundplatte 8 gebildet. Die Grundplatte 8 ist in der dargestellten Ausführungsform als Stanzteil gestaltet. In anderen Ausgestaltungen ist ein Kunststoff-Element als Grundplatte 8 vorgesehen.

Die Traverse 4 weist mindestens zwei bügelförmige Stege 42 auf. Die Stege 42 erstrecken sich in Axialrichtung I in Richtung der Grundplatte 8. Die Grundplatte 8 weist Laschen 80 auf, in welche die Stege 42 eingehängt sind, sodass ein Käfig gebildet wird.

Das Thermostatventil 1 umfasst weiter ein Antriebselement, welches als thermostatisches Arbeitselement 5 mit einem Arbeitskolben 50, welcher aus einem Gehäuse 51 des Arbeitselements 5 austreibbar ist, gestaltet ist. Das dargestellte thermostatische Arbeitselement 5 ist als Dehnstoffarbeitselement ausgebildet, wobei das Gehäuse 51 mit einem Dehnstoff gefüllt ist, welcher temperaturabhängig sein Volumen ändert und so bei einer entsprechenden Temperaturerhöhung den Arbeitskolben 50 aus dem Gehäuse 51 austreibt. Das dargestellte Arbeitselement 5 umfasst weiter Anschlüsse 52, welche eine elektronische Ansteuerung ermöglichen. Bei dem in den Fig. 1 bis 4 dargestellten Ausführungsbeispiel ist das Gehäuse 51 ortsfest gelagert, wobei der Arbeitskolben 50 relativ zu dem Gehäuse 51 bewegt wird.

Das Hauptventilelement 30, das erste Kurzschluss-Ventilelement 31 und das zweite Kurzschluss-Ventilelement 6 sind mit dem Arbeitskolben 50 für eine Bewegungsübertragung gekoppelt. In dem dargestellten Ausführungsbeispiel ist der Arbeitskolben 50 verschieblich in eine Ausnehmung eines Übertragungselements 53 eingesetzt. Ein Ende des Arbeitskolbens 50 wirkt dabei mit dem Boden des Übertragungselements 53 zusammen, sodass bei einem Ausfahren des Arbeitskolbens 50 die Bewegung auf das Übertragungselement 53 übertragen wird. Eine Bewegung des Übertragungselements 53 in Ausfahrrichtung des Arbeitskolbens 50 ist dagegen aufgrund der verschieblichen Verbindung relativ zu dem Arbeitskolben 50 ohne Mitnahme des Arbeitskolbens 50 für die Überdruckfunktion möglich. Das zweite Kurzschluss-Ventilelement 6 ist mit dem Übertragungselement 53 für eine Bewegungsübertragung gekoppelt. Das Kurzschluss-Ventilelement 6 ist in dem in Fig. 1 bis 4 dargestellten Ausführungsbeispiel als Stanzteil gestaltet, welches starr aufgrund wirkender Klemmkräfte mit dem Übertragungselement 53 verbunden ist. In anderen Ausgestaltungen ist eine Verschraubung oder Vernietung vorgesehen oder für eine nicht starre Ausführung wird das Übertragungselement 6 auf das Kurzschluss-Ventilelement nur aufgeschoben. In wieder anderen Ausgestaltungen ist eine einteilige Ausgestaltung des Ventiltellers des Kurzschluss-Ventilelements oder Hauptventilelements mit dem Übertragungselement 53 vorgesehen. Für eine Bewegungsübertragung der Bewegung des Arbeitskolbens 50 auf das erste Kurzschluss-Ventilelement 31 und das Hauptventilelement 30 ist ein Mitnehmer 32 vorgesehen. Der Mitnehmer 32 wirkt mit einem als Ringschulter 54 gestalteten Abschnitt des Übertragungseletnents 53 für eine Bewegungsübertragung zusammen. Der Mitnehmer 32 und die Ringschulter 54 sind in einem als Leerhub X bezeichneten Abstand angeordnet, sodass erst bei einem den Leerhub X übersteigenden Hub des Arbeitskolbens 50 eine Bewegungsübertragung auf das erste Kurzschluss-Ventilelement 31 und das Hauptventilelement 30 erfolgt. Die Druckfeder 9 zwingt dagegen das Übertragungselement 53 an den Arbeitskolben 50, sodass eine Bewegung des Arbeitskolbens 50 in Öffnungsrichtung ohne Mitnahme des zweiten Kurzschluss-Ventilelements 6 durch die Druckfeder 9 verhindert ist.

Das Hauptventilelement 30, das erste Kurzschluss-Ventilelement 31 und der Mitnehmer 32 sind in dem dargestellten Ausführungsbeispiel als ein gemeinsames Bauteil 3 realisiert. In anderen Ausgestaltungen sind das Hauptventilelement 30 und das erste Kurzschluss-Ventilelement 31 als ein Bauteil gefertigt, welches mit einem Mitnehmer 32 für eine Bewegungsübertragung verbunden ist. In einem das Hauptventilelement 30 mit dem ersten Kurzschluss-Ventilelement 31 verbindenden Bereich des Bauteils 3 sind dabei Durchgangsöffnungen vorgesehen, um eine gute Umströmung des Gehäuses 51 sicherzustellen.

Ein Austreiben des Arbeitskolbens 50 erfolgt entgegen der Kraft der ersten Druckfeder 7 sowie der zweiten, zwischen der Traverse 4 und dem zweiten Kurzschluss-Ventilelement 6 abgestützten Druckfeder 9. Die Traverse 4 weist zu diesem Zweck Haltearme 43 auf, welche die Druckfeder 9 abstützen.

Bei einem Austreiben des Arbeitskolbens 50 wird aufgrund des Leerhubs X zunächst lediglich das zweite Kurzschluss-Ventilelement 6 bewegt. Die Bewegung erfolgt somit lediglich entgegen der Kraft der zweiten Druckfeder 9. Erst wenn der Hub des Arbeitskolbens 50 den Leerhub X übersteigt, wirkt die Druckfeder 7 der Bewegung entgegen. Bei einem den Leerhub X nicht übersteigenden Hub hält dagegen die Druckfeder 7 den Hauptventilteller 30 an seinem Ventilsitz und das erste Kurzschluss-Ventilelement 31 in einem Abstand zu dem zugehörigen Ventilsitz.

Für eine Montage werden das thermostatische Arbeitselement 5 und die Druckfedern 7, 9 zusammen mit dem Hauptventilelement 30, dem Übertragungselement 53 und dem Kurzschluss-Ventilelement 6 in die Traverse 4 eingesetzt und die Traverse 4 wird mit der Grundplatte 8 verbunden. Hierfür wird die Traverse 4 entgegen der Kraft der Druckfeder 7 in Richtung Grundplatte 8 verschoben und die Stege 42 der Traverse 4 werden unter Kompression der Druckfeder 7 in die Laschen 80 eingehängt. Aufgrund der Rückstellkraft der Druckfeder 7 ist nach einer Rücknahme der für die Kompression notwendigen Kraft die Traverse 4 mit der Grundplatte 8 mechanisch verbunden, sodass eine Baugruppe gebildet ist. Die Laschen 80 der Grundplatte 8 und die Stege 42 der Traverse 4 sind auch nach einem Einhängen entgegen der Kraft der Druckfeder 7 relativ zueinander verschieblich.

In Betrieb ist der Kühlmittelfluss in einer Warmlaufphase zunächst wie in Fig. 1 dargestellt unterbunden, da das zweite Kurzschluss-Ventilelement 6 aufgrund der Rückstellkraft der Druckfeder 9 auf dem zugehörigen Ventilsitz an der Traverse 4 anliegt und somit die Öffnung 40 schließt. Aufgrund hoher Motordrehzahlen ist bei kaltem Kühlmittel die Entstehung eines ungewünscht hohen Drucks im Kühlkreislauf möglich. Bei dem Thermostatventil 1 ist daher eine Überdruckfunktion vorgesehen. Sofern in der Warmlaufphase ein Differenzdruck zwischen Verteilerkammer und Kurzschlusskanal einen definierten Wert übersteigt, wird die Öffnung 40 aufgrund der auf das Kurzschluss-Ventilelement 6 einwirkenden Druckkraft entgegen der Kraft der Druckfeder 9 geöffnet.

Ein für die Öffnung notwendiger Differenzdruck ergibt sich für die Motoraustrittsregelung aus dem Quotienten einer Rückstellkraft der Druckfeder 9 und einer Fläche des Kurzschluss-Ventilelements 6.

Fig. 2 zeigt den Überdruckbetrieb, wobei das Kurzschluss-Ventilelement 6 entgegen der Kraft der Druckfeder 9 verstellt ist. Das mit dem zweiten Kurzschluss-Ventilelement 6 gekoppelte Übertragungselement 53 wird dabei ebenfalls verschoben. In dem dargestellten Ausführungsbeispiel ist das Übertragungselement 53 verschieblich mit dem Arbeitskolben 50 gekoppelt. Die Bewegung des Übertragungselements 53 wird daher nicht auf den Arbeitskolben 50 übertragen. Aufgrund des Leerhubs X (s. Fig. 1) zwischen dem Mitnehmer 32 und dem Übertragungselement 53 wird eine Bewegung des ersten Kurzschluss-Ventüelements 6 nicht über das Übertragungselement 53 auf das Bauteil 3 übertragen. Das erste Kurzschluss-Ventilelement 31 verbleibt somit in der Offenstellung und wird durch die Druckfeder 7 in dieser Stellung gehalten. Dadurch ist eine sichere Überdruckfunktion gewährleistet.

Eine Überdruckfunktion schützt bei einem kalten Kühlmedium und des aufgrund der Temperatur die Öffnung 40 verschließenden zweiten Kurzschluss-Ventilelement 6 andere, nicht dargestellte Aggregate, die sich im Kühlkreislauf befinden, vor zu hohen Drücken.

Um neben einer Überdruckfunktion auch eine temperaturabhängige Öffnung zu erzielen, ist ein nicht dargestellter Leckagekanal an der Traverse 4 vorgesehen, welcher eine Anströmung des Gehäuses 51 durch einen Fluidstrom aus der Verteilerkammer heraus ermöglicht. Der Leckagekanal ist in einer Ausgestaltung durch eine Nut an einem Außenumfang der Traverse 4 realisiert. In anderen Ausgestaltungen sind Öffnungen in einem plattenförmigen Bereich der Traverse 4 vorgesehen.

Das Gehäuse 51 ist mit einem Dehnstoff gefüllt, welcher temperaturabhängig sein Volumen ändert. Bei einer Erwärmung des Dehnstoffs in dem Gehäuse 51 wird der Arbeitskolben 50 aus dem Gehäuse 51 herausgetrieben. Ein Ende des Arbeitskolbens 50 wirkt dabei mit dem Übertragungselement 53 zusammen, sodass die Bewegung auf das Übertragungselement 53 übertragen wird. Aufgrund des Leerhubs X zwischen Übertragungselement 53 und Mitnehmer 32 verbleiben das Bauteil 3 und somit das Hauptventilelement 30 und das erste Kurzschluss-Ventilelement 31 zunächst in der in Fig. 1 dargestellten Position. Erst nach Überwinden des Leerhubs X (s. Fig. 1) werden das Bauteil 3 und somit das Hauptventilelement 30 und das erste Kurzschluss-Ventilelement 31 verschoben. Je nach Temperatur wird so ein Mischbetrieb (vgl. Fig. 3) oder ein Kühlbetrieb (vgl. Fig. 4) eingestellt.

Die Fig. 5 und 6 zeigen schematisch das als Thermostateinsatz gestaltete Thermostatventil 1 gemäß den Fig. 1 bis 4 in Darstellung einer Motoreintrittsregelung, kurz Eintrittsregelung, in zwei Überdruckbetrieb-Funktionen. Die Bauteile entsprechen dabei den Fig. 1 bis 4 und für gleiche Bauteile werden einheitliche Bezugszeichen verwendet. Auf eine wiederholte Beschreibung der Bauteile wird verzichtet. Im Unterschied zu dem Ausführungsbeispiel gemäß Fig. 1 bis 4 betreffend eine Motoraustrittsregelung ist bei der Motoreintrittsregelung das Hauptventilelement 30 zwischen einem Motoreintritt 20 und einem Anschluss 22 zu einem Kühlmittelkühler angeordnet. Die Fluidströme bei einer Motoreintrittsregelung sind durch Pfeile E dargestellt.

Wie in den Fig. 5 und 6 erkennbar ist, wird bei einer Motoreintrittsregelung bei einem auftretenden Überdruck die Traverse 4 entgegen der Kraft der Druckfeder 7 bzw. entgegen der Kraft der Druckfedern 7 und 9 verschoben. Dabei wird zunächst aufgrund des auftretenden Drucks auch das zweite Kurzschluss-Ventilelement 6 mit der Traverse 4 verschoben. Die Druckfeder 9 zwingt das zweite Kurzschluss-Ventilelement 6 und damit das Übertragungselement 53 in Kontakt mit dem Arbeitskolben 50, sodass die Bewegung des Kurzschluss-Ventilelements 6 auf den Arbeitskolben 50 übertragen wird. Aufgrund der Bewegung des zweiten Kurzschluss-Ventilelements 6 ändert sich somit nur ein Abstand zwischen der Grundplatte 8 und der Traverse, wohingegen ein Abstand zwischen der Traverse 4 und dem zweiten Kurzschluss-Ventilelement 6 im Wesentlichen konstant bleibt. Daher wird die Traverse 4 zunächst nur entgegen der Kraft der zwischen Traverse 4 und Hauptventilelement 30 angeordneten Druckfeder 7 bewegt. Die hierfür notwendige Kraft ergibt sich aufgrund eines Quotienten aus der Kraft der Druckfeder 7 und der wirksamen Fläche der Traverse 4. Nach einem definierbaren Verstellweg wird ein weiteres Verstellen des zweiten Kurzschluss-Ventilelements 6 und/oder des Arbeitskolbens 50 in Richtung Grundplatte 8 über einen nicht dargestellten Anschlag verhindert. Durch diesen Anschlag wird auch eine Beschädigung des thermostatischen Arbeitselements 5 aufgrund des einwirkenden Differenzdrucks verhindert. Nach einem Erreichen des Anschlags, wird die Traverse 4 somit relativ zu dem zweiten Kurzschluss-Ventilelement 6 verschoben, sodass sich ein Abstand zwischen der Traverse 4 und dem zweiten Kurzschluss-Ventilelement 6 bzw. dem Gegenstück 2 ändert. Damit erfolgt ein weiteres Verstellen der Traverse 4 entgegen der Kraft beider Druckfedern 7 und 9. Die hierfür notwendige Kraft ergibt sich somit aus einem Quotienten aus der Summe der Kräfte der Druckfeder 7, 9 und der Differenz der wirksamen Fläche der Traverse 4 und des zweiten Kurzschluss-Ventilelements 6.

Um auch bei einer Motoreintrittsregelung neben einer Überdruckfunktion auch eine temperaturabhängige Öffnung zu erzielen, ist ein nicht dargestellter Leckagekanal an der Traverse 4 vorgesehen, welcher eine Anströmung des Gehäuses 51 durch einen Fluidstrom in die Mischkammer ermöglicht. Ein temperaturabhängiges Verstellen des Arbeitskolbens 50 und der damit gekoppelten Elemente erfolgt dabei analog zu einer Motoraustrittsregelung.

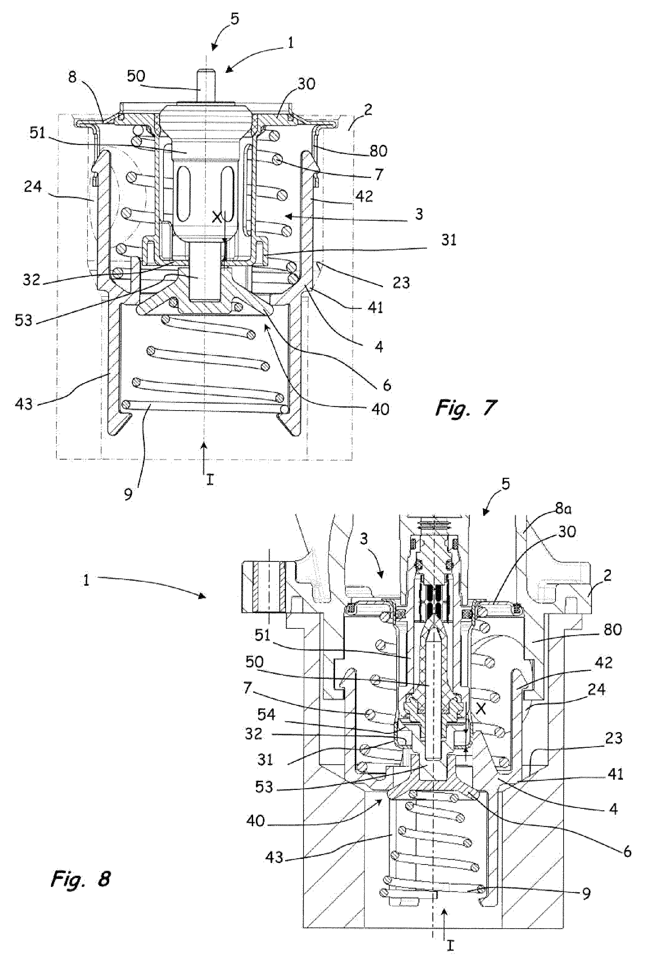

Fig. 7 zeigt ein zweites Ausführungsbeispiel eines als Thermostateinsatz gestalteten Thermostatventils 1 bei Kühlmittelstillstand. Die Bauteile entsprechen dabei größtenteils den Bauteilen gemäß den Fig. 1 bis 4 und für gleiche oder ähnliche Bauteile werden einheitliche Bezugszeichen verwendet. Im Unterschied zu dem Ausführungsbeispiel gemäß Fig. 1 bis 4 ist bei der Ausgestaltung gemäß Fig. 7 das thermostatische Arbeitselement 5 um 180° gedreht. Dabei ist ein Arbeitskolben 50 ortsfest gelagert und ein Gehäuse 51 wird für eine Verstellbewegung der Ventile verschoben. Anschlüsse in das Gehäuse, welche eine elektronische Ansteuerung ermöglichen, sind dabei nicht vorgesehen. Das Thermostatventil gemäß Fig. 7 ist sowohl in einer Motoraustrittsregelung als auch in einer Motoreintrittsregelung einsetzbar, wobei ein Anschluss 24 zu einem Motoraustritt (vgl. Fig. 1 bis 4) bzw. einem Motoreintritt (vgl. Fig. 5 und 6) führt.

Das Hauptventilelement 30, das erste Kurzschluss-Ventilelement 31 und das zweite Kurzschluss-Ventilelement 6 sind mit dem Gehäuse 51 für eine Bewegungsübertragung gekoppelt. In dem dargestellten Ausführungsbeispiel ist ein Übertragungselement 53 an dem Gehäuse 51 angebracht. Das Übertragungselement 53 ist als ein von einer dem Arbeitskolben 50 entgegengesetzten Seite abragender Bolzen gestaltet. Das zweite Kurzschluss-Ventilelement 6 ist als Kunststoffteil gefertigt und mit dem Übertragungselement 53 für eine Bewegungsübertragung gekoppelt. Die Druckfeder 9 zwingt das zweite Kurzschluss-Ventilelement 6 in die Schließstellung. Das Übertragungselement 53 ist vorzugsweise verschieblich in eine Ausnehmung an dem zweite Kurzschluss-Ventilelement 6 eingesetzt, sodass bei einer Motoraustrittsregelung das Kurzschluss-Ventilelement 6 bei einem Überdruck relativ zu dem Übertragungselement 53 zum Freigeben der Öffnung 40 verschieblich ist.

Für eine Bewegungsübertragung auf das erste Kurzschluss-Ventilelement 31 und das Hauptventilelement 30 ist ein Mitnehmer 32 vorgesehen, wobei der Mitnehmer 32 mit einem Boden des Gehäuses 51 mit einem Leerhub X gekoppelt ist, sodass erst bei einem den Leerhub X übersteigenden Hub des Gehäuses 51 eine Bewegungsübertragung auf das erste Kurzschluss-Ventilelement 31 und das Hauptventilelement 30 erfolgt. Da der Boden des Gehäuses 51 mit dem Mitnehmer 32 zusammenwirkt, ist es möglich, an dem Übertragungselement 53 auf eine Ringschulter 54 (vgl. Fig. 1) zu verzichten.

Das Hauptventilelement 30, das erste Kurzschluss-Ventilelement 31 und der Mitnehmer 32 sind als integrales Bauteil 3 realisiert. In einem das Hauptventilelement 30 mit dem ersten Kurzschluss-Ventilelement 31 verbindenden Bereich des Bauteils 3, welcher am Umfang des Gehäuses 51 angeordnet ist, sind dabei Durchgangsöffnungen vorgesehen, um eine gute Umströmung des Gehäuses 51 sicherzustellen.

Ein Verstellen des Gehäuses 51 erfolgt zunächst entgegen der Kraft der zweiten Druckfeder 9 und nach Überwindung des Leerhubs X entgegen der Kraft der ersten Druckfeder 7 und der Druckfeder 9. Bei einer Motoreintrittsregelung ist die Traverse 4 wie in den Fig. 5 und 6 beschrieben zunächst entgegen der Kraft der ersten Druckfeder 7 und nach Erreichen eines Anschlags entgegen der Kraft der ersten Druckfeder 7 und der Druckfeder 9 verstellbar. Bei einer Motoraustrittsregelung ist das zweite Kurzschluss-Ventilelement 6 entgegen der Kraft der Druckfeder 9 verstellbar.

Fig. 8 zeigt ein Ausführungsbeispiel eines als Integralthermostat gestalteten Thermostatventils 1 bei Kühlmittelstillstand. Die Bauteile entsprechen dabei im Wesentlichen den Bauteilen gemäß den Fig. 1 bis 4 und für gleiche oder ähnliche Bauteile werden einheitliche Bezugszeichen verwendet. Im Unterschied zu dem Ausführungsbeispiel gemäß Fig. 1 bis 4 ist bei der Ausgestaltung gemäß Fig. 8 als Grundelement ein Thermostatdeckel 8a mit Laschen 80 vorgesehen, in welche an der Traverse 4 angeordnete Stege 42 eingehängt sind.

Das erste Kurzschluss-Ventilelement 31 ist bei dem Ausführungsbeispiel gemäß Fig. 8 an einem Stanzteil 3 vorgesehen, welches mit dem Hauptventilelement 30 zu einem integralen Bauteil zusammengesetzt ist. Ein Boden des Stanzteils 3 bildet den Mitnehmer 32 für eine Übertragung der Bewegung des Arbeitskolbens 50 und damit des Übertragungselements 53 auf das Stanzteil 3, wobei der Boden in dem dargestellten Kühlmittelstillstand-Betrieb von einem Übertragungselement 53 mit einem Leerhub X beabstandet angeordnet ist.

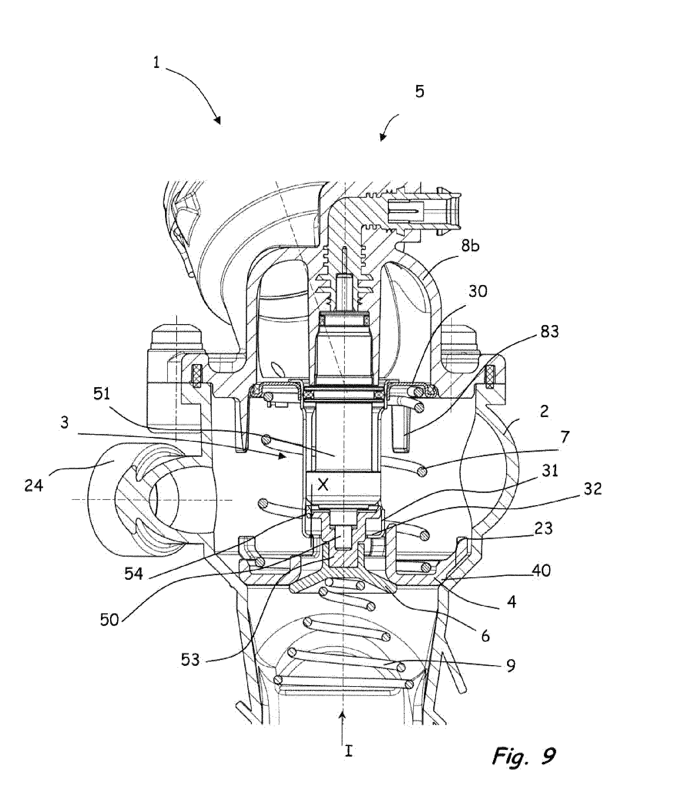

Fig. 9 zeigt ein nicht erfindungsgemäßes Beispiel eines als Gehäusethermostat gestalteten Thermostatventils 1 bei Kühlmittelstillstand. Die Bauteile entsprechen dabei größtenteils den Bauteilen gemäß Fig. 8 und für gleiche oder ähnliche Bauteile werden einheitliche Bezugszeichen verwendet. Wie bei dem Ausführungsbeispiel gemäß Fig. 8 ist bei der Ausgestaltung gemäß Fig. 9 als Grundelement ein Thermostatdeckel 8b vorgesehen, wobei der Thermostatdeckel 8b im Unterschied zu den vorangegangen Ausführungsbeispielen keine Laschen aufweist. Dabei ist das Hauptventilelement 30 bei einer Stellbewegung durch von dem Thermostatdeckel 8b abragende Stege 83 geführt.

Weiter ist bei dem Beispiel gemäß Fig. 9 die zweite Druckfeder 9, welche mit dem zweiten Kurzschluss-Ventilelement 6 zusammenwirkt, an dem als Gehäuse gestalteten Gegenstück 2 gelagert. Bei einer Motoraustrittsregelung ist eine Überdruckfunktion entgegen der Kraft der zweiten Druckfeder 9 wie oben beschrieben vorgesehen. Da die Druckfeder 9 nicht an der Traverse 4 angreift, wirkt bei einer Motoreintrittsregelung dagegen die zweite Druckfeder 9 zunächst unterstützend für die Öffnungsbewegung, wobei sich der Öffnungsdruck durch den Quotienten einer Differenz zwischen der Rückstellkraft der ersten Druckfeder 7 und einer Rückstellkraft der zweiten Druckfeder 9 und einer wirksamen Fläche der Traverse 4 ergibt. Ein Verschieben des thermostatischen Arbeitselements 5 ist wie oben beschrieben durch einen Anschlag (nicht dargestellt) begrenzt. Nach Erreichen des Anschlags wirkt die zweite Druckfeder 9 nicht länger unterstützend. Daher ergibt sich nach Erreichen des Anschlags der Öffnungsdruck durch den Quotienten der Rückstellkraft der ersten Druckfeder 7 und der Differenz einer wirksamen Fläche der Traverse 4 und des zweiten Kurzschluss-Ventilelements 6.

Sämtliche Angaben zur Ermittlung der Öffnungskraft sind lediglich näherungsweise und eine Ermittlung der Öffnungskraft erfolgt unter Vernachlässigung einer Hysterese der Druckfedern oder nicht-linearer Federeigenschaften.

Alle dargestellten Thermostatventile sind baugleich sowohl für eine Motoreintrittsregelung, als auch für eine Motoreintrittsregelung einsetzbar. Dadurch ergeben sich fertigungstechnische Vorteile.

## Patentansprüche

1. Thermostatventilanordnung mit einem in einem als Gehäuse gestalteten Gegenstück angeordneten Thermostatventil für eine Kühlanlage eines Verbrennungsmotors mit Kühlmittelstillstand-Funktion umfassend ein erstes Kurzschluss-Ventilelement (31) und ein zweites Kurzschluss-Ventilelement (6), ein in einem Gegenstück (2) zu einem Anschluss (22) zu einem Kühlmittelkühler anzuordnendes Hauptventilelement (30) und eine zwischen einem Motoraustritt (21) und einem Motoreintritt (20) anzuordnende Traverse (4), welche einen Ventilsitz für das erste Kurzschluss-Ventilelement (31) und das zweite Kurzschluss-Ventilelement (6) bildet, wobei die Traverse (4) an ihrer Außenseite einen Bund (41) aufweist, welcher einen axialen Auflagebereich für das Gegenstück (2) bildet und welcher durch eine Druckfeder (7) in Axialrichtung (I) belastet ist, sodass der Bund (41) in Richtung des Gegenstücks (2) gezwungen ist, wobei wenigstens zwei unterschiedlich ausgelegte Rückstellelemente (7,9) vorgesehen sind, **dadurch gekennzeichnet, dass** die Druckfeder (7) ein erstes Rückstellelement (7) für das erste Kurzschluss-Ventilelement (31) und das Hauptventilelement (30) bildet, wobei das erste Kurzschluss-Ventilelement (31) entgegen der Kraft des ersten Rückstellelements (7) und das zweite Kurzschluss-Ventilelement (6) entgegen der Kraft eines zweiten Rückstellelements (9) verstellbar gelagert ist, und wobei das erste Rückstellelement (7) und das zweite Rückstellelement (9) an gegenüberliegenden Seiten der Traverse (4) abgestützt sind.

2. Thermostatventilanvrdnung nach Anspruch **1**, **dadurch gekennzeichnet, dass** das Hauptventilelement (30), das erste Kurzschluss-Ventilelement (31) und das zweite Kurzschluss-Ventilelement (6) mit einem Antriebselement (5) für eine Bewegungsübertragung gekoppelt sind, wobei vorzugsweise das erste Kurzschluss-Ventilelement (31) und/oder das Hauptventilelement (30) mit einem Leerhub (X) mit dem Antriebselement (5) gekoppelt sind.

3. Thermostatventilanordnung nach einem der Ansprüche 1 oder 2, **dadurch gekennzeichnet, dass** die Traverse (4) eine Halteelementeinrichtung für das zweite Rückstellelement aufweist, wobei die Halteelementeinrichtung vorzugsweise mindestens zwei in Axialrichtung ragende Haltearme (43) aufweist.

4. Thermostatventilanordnung nach einem der Ansprüche 1 bis 3, **dadurch gekennzeichnet, dass** das Hauptventilelement (30) und das erste Kurzschluss-Ventilelement (31) als integrales Bauteil (3) gestaltet sind.

5. Thermostatventilanordnung nach einem der Ansprüche 1 bis 4, **dadurch gekennzeichnet, dass** ein einen Hauptventilsitz bildendes Grundelement vorgesehen ist, wobei das Grundelement und die Traverse (4) entgegen der Kraft der Druckfeder (7) begrenzt verschieblich verbunden sind.

6. Thermostatventilanordnung nach Anspruch 5, **dadurch gekennzeichnet, dass** die Traverse (4) mindestens zwei Stege (42) aufweist, welche mit korrespondierenden Laschen (80) des Grundelements mechanisch verbunden sind, wobei insbesondere die Stege (42) und die Laschen (80) als korrespondierende Bügel und Haken ausgebildet sind, wobei die Haken in die Bügel eingehängt, insbesondere begrenzt verschieblich eingehängt sind.

7. Thermostatventilanordnung nach einem der Ansprüche 1 bis 6, **dadurch gekennzeichnet, dass** das zweite Kurzschluss-Ventilelement (6) als Ventilteller ausgebildet ist, insbesondere als konischer Ventilteller.

8. Thermostatventilanordnung nach einem der Ansprüche 1 bis 7, **dadurch gekennzeichnet, dass** ein thermostatisches Arbeitselement (5) mit einem Arbeitskolben (50), welcher aus einem Gehäuse (51) des Arbeitselements (5) austreibbar ist, vorgesehen ist, wobei das Hauptventilelement (30), das erste Kurzschluss-Ventilelament (31) und das zweite Kurzschluss-Ventilelement (6) mit dem beim Austreiben des Arbeitskolbens (50) aus dem Gehäuse (51) bewegten Element für eine Bewegungsübertragung verbunden sind.

## Claims

1. A thermostat valve assembly, having a thermostat valve arranged within a counterpart formed as a housing, for a cooling system of an internal combustion engine with coolant stoppage function, comprising a first short-circuit valve element (31) and a second short-circuit valve element (6), a main valve element (30) to be arranged in a counterpart (2) with respect to a connector (22) to a coolant cooler, and a traverse (4) to be arranged between an engine outlet (21) and an engine inlet (20), said traverse forming a valve seat for the first short-circuit valve element (31) and the second short-circuit valve element (6), wherein the traverse (4) has, on its outer side, a collar (41) which forms an axial abutment region for the counterpart (2) and which is loaded in an axial direction (I) by a compression spring (7) such that the collar (41) is forced in the direction of the counterpart (2), wherein at least two differently designed restoring elements (7, 9) are provided, **characterised in that** said compression spring (7) forms a first restoring element (7) for the first short-circuit valve element (31) and the main valve element (30), wherein the first short-circuit valve element (31) is mounted so as to be adjustable counter to the force of the first restoring element (7) and the second short-circuit valve element (6) is mounted so as to be adjustable counter to the force of a second restoring element (9), and wherein the first restoring element (7) and the second restoring element (9) are supported on opposite sides of the traverse (4).

2. The thermostat valve assembly as claimed in claim 1, **characterised in that** the main valve element (30), the first short-circuit valve element (31) and the second short-circuit valve element (6) are coupled to a drive element (5) for a transmission of movement, wherein preferably the first short-circuit valve element (31) and/or the main valve element (30) are coupled to the drive element (5) with an idle stroke (X).

3. The thermostat valve assembly as claimed in any one of claims 1 or 2, **characterised in that** the traverse (4) has a retention element device for the second restoring element, wherein the retention element device preferably has at least two retention arms (43) which project in an axial direction.

4. The thermostat valve assembly as claimed in any one of claims 1 to 3, **characterised in that** the main valve element (30) and the first short-circuit valve element (31) are formed as an integral component (3).

5. The thermostat valve assembly as claimed in any one of claims 1 to 4, **characterised in that** a base element is provided which forms a main valve seat, wherein said base element and the traverse (4) are connected so as to be displaceable to a limited extent counter to the force of the compression spring (7).

6. The thermostat valve assembly as claimed in claim 5, **characterised in that** the traverse (4) has at least two webs (42) which are mechanically connected to corresponding lugs (80) of the base element, wherein in particular the webs (42) and the lugs (80) are formed as corresponding brackets and hooks, wherein the hooks are hooked, in particular so as to be displaceable to a limited extent, into the brackets.

7. The thermostat valve assembly as claimed in any one of claims 1 to 6, **characterised in that** the second short-circuit valve element (6) is in the form of a valve plate, in particular a conical valve plate.

8. The thermostat valve assembly as claimed in any one of claims 1 to 7, **characterised in that** a thermostatic working element (5) is provided which has a working piston (50) which is adapted to be driven out of a housing (51) of the working element (5), wherein the main valve element (30), the first short-circuit valve element (31) and the second short-circuit valve element (6) are connected, for a transmission of movement, to the element which is moved as the working piston (50) is driven out of the housing (51).

## Revendications

1. Agencement de valve thermostatique comprenant une valve thermostatique disposée dans une pièce homologue configurée comme un boîtier, ladite valve thermostatique étant prévue pour un système de refroidissement d'un moteur à combustion interne et ayant une fonction d'arrêt du liquide de refroidissement, ladite valve thermostatique comprenant un premier élément de valve de dérivation (31) et un deuxième élément de valve de dérivation (6), un élément de valve principal (30) à agencer dans une pièce homologue (2) pour un raccordement (22) à un radiateur à liquide de refroidissement, et une traverse (4) à agencer entre une sortie moteur (21) et une entrée moteur (20), traverse qui forme un siège de valve pour le premier élément de valve de dérivation (31) et pour le deuxième élément de valve de dérivation (6), où la traverse (4) présente, sur son côté extérieur, un collet (41) qui forme une zone d'appui axiale pour la pièce homologue (2) et qui est sollicité dans la direction axiale (I) par un ressort de pression (7), de sorte que le collet (41) est contraint en direction de la pièce homologue (2), où il est prévu au moins deux éléments de rappel (7, 9) dimensionnés de façon différente, **caractérisé en ce que** le ressort de pression (7) forme un premier élément de rappel (7) pour le premier élément de valve de dérivation (31) et pour l'élément de valve principal (30), où le premier élément de valve de dérivation (31) est monté en étant mobile, en s'opposant à la force du premier élément de rappel (7), le deuxième élément de valve de dérivation (6) étant mobile en s'opposant à la force d'un deuxième élément de rappel (9), et où le premier élément de rappel (7) et le deuxième élément de rappel (9) sont supportés sur des côtés opposés de la traverse (4).

2. Agencement de valve thermostatique selon la revendication 1, **caractérisé en ce que** l'élément de valve principal (30), le premier élément de valve de dérivation (31) et le deuxième élément de valve de dérivation (6) sont couplés à un élément d'entraînement (5) pour une transmission de mouvement où, de préférence, le premier élément de valve de dérivation (31) et / ou l'élément de valve principal (30) sont couplés à l'élément d'entraînement (5) ayant une course à vide (X).

3. Agencement de valve thermostatique selon l'une des revendications 1 ou 2, **caractérisé en ce que** la traverse (4) présente un dispositif à éléments de support pour le deuxième élément de rappel, où le dispositif à éléments de support présente de préférence au moins deux bras de support (43) faisant saillie dans la direction axiale.

4. Agencement de valve thermostatique selon l'une quelconque des revendications 1 à 3, **caractérisé en ce que** l'élément de valve principal (30) et le premier élément de valve de dérivation (31) sont configurés comme un composant d'un seul tenant (3).

5. Agencement de valve thermostatique selon l'une quelconque des revendications 1 à 4, **caractérisé en ce qu'**il est prévu un élément de base formant un siège de valve principal, où l'élément de base et la traverse (4) sont combinés en étant mobiles de façon limitée, en s'opposant à la force du ressort de pression (7).

6. Agencement de valve thermostatique selon la revendication 5, **caractérisé en ce que** la traverse (4) présente au moins deux barrettes (42) qui sont reliées mécaniquement à des languettes correspondantes (80) de l'élément de base, où en particulier les barrettes (42) et les languettes (80) sont configurées comme des étriers et des crochets correspondants, où les crochets sont accrochés dans les étriers, en particulier accrochés en étant mobiles de façon limitée.

7. Agencement de valve thermostatique selon l'une quelconque des revendications 1 à 6, **caractérisé en ce que** le deuxième élément de valve de dérivation (6) est configuré comme une tête de valve, en particulier comme une tête de valve conique.

8. Agencement de valve thermostatique selon l'une quelconque des revendications 1 à 7, **caractérisé en ce qu'**il est prévu un élément de travail thermostatique (5) comprenant un piston de travail (50) qui peut être chassé d'un boîtier (51) de l'élément de travail (5), où l'élément de valve principal (30), le premier élément de valve de dérivation (31) et le deuxième élément de valve de dérivation (6) sont reliés, pour une transmission de mouvement, à l'élément déplacé lors de l'expulsion du piston de travail (50) sortant du boîtier (51).
